# EUROPÄISCHE PATENTSCHRIFT

(11) **EP 2 802 610 B1**
(45) Veröffentlichungstag und Bekanntmachung des Hinweises auf die Patenterteilung: **07.11.2018**
(21) Anmeldenummer: 13700016.2
(22) Anmeldetag: 04.01.2013
(51) Int. Cl.: C08F 110/10, C08F 2/00

(54) **VERFAHREN ZUR KONTINUIERLICHEN HERSTELLUNG VON POLYISOBUTYLEN**
METHOD FOR THE CONTINUOUS PRODUCTION OF POLYISOBUTYLENE
PROCÉDÉ DE PRODUCTION EN CONTINU DE POLYISOBUTYLÈNE

(30) Priorität: 09.01.2012 EP 12150482
(43) Veröffentlichungstag der Anmeldung: 19.11.2014
(73) Patentinhaber: BASF SE, 67056 Ludwigshafen am Rhein (DE)
(72) Erfinder: WETTLING, Thomas, 67117 Limburgerhof (DE); HIRSCH, Stefan, 67435 Neustadt (DE); BRYM, Markus, 67117 Limburgerhof (DE); WEIS, Markus, 67354 Römerberg (DE)
(74) Vertreter: BASF IP Association
(86) Internationale Anmeldenummer: PCT/EP2013/050075
(87) Internationale Veröffentlichungsnummer: WO 2013/104559

(56) Entgegenhaltungen:
- EP-A2- 0 807 641
- WO-A1-01/27172
- WO-A1-01/30869
- WO-A1-02/40553
- WO-A1-96/40808
- WO-A1-2007/057406
- WO-A1-2009/133187
- US-A- 5 182 333

## Beschreibung

Die vorliegende Erfindung betrifft ein verbessertes Verfahren zur kontinuierlichen Herstellung von Polyisobutylen mit einem Gehalt an endständigen Doppelbindungen von mehr als 50% durch Polymerisation von Isobuten in Gegenwart eines hierfür üblichen Polymerisationskatalysators. Weiterhin betrifft die vorliegende Erfindung eine Polymerisationsanlage zur Durchführung dieses Verfahrens.

Polyisobutylen wird überwiegend aus technischen C₄-Kohlenwasserstoffströmen durch gezielte Polymerisation des darin enthaltenen Isobutens - gegebenenfalls nach Reinigung und/oder Aufkonzentration des Stromes - gewonnen. Diese C4-Ströme enthalten typischerweise neben Isobuten größere Mengen 1-Buten und 2-Buten sowie kleinere Mengen an 1,3-Butadien, daneben sind oftmals nennenswerte Anteile an Butanen enthalten. Solche Isobuten enthaltende C₄-Kohlenwasserstoffströme sind beispielsweise C₄-Raffinate wie "Raffinat 2" und insbesondere "Raffinat 1", C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Ein C₄-Kohlenwasserstoffstrom aus einer FCC-Raffinerieeinheit ist auch als "b/b"-Strom bekannt. Weitere geeignete Isobuten enthaltende C₄-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C₄-Kohlenwasserstoffströme enthalten in der Regel 3000 Gew.-ppm Butadiene oder weniger. Die Anwesenheit von 1-Buten sowie von cis-und trans-2-Buten ist für die gezielte Polymerisation des Isobutens weitgehend unkritisch.

Typischerweise liegt die Konzentration an Isobuten in den genannten C₄-Kohlenwasserstoffströmen im Bereich von 30 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten, 2 bis 35 Gew.-% Butanen sowie 20 bis 2000 Gew.-ppm Butadiene. Beim Polymerisationsverfahren unter Verwendung von Raffinat 1 verhalten sich die unverzeigten Butene in der Regel praktisch inert und nur das Isobuten wird polymerisiert.

In der WO 2007/096296 A1 wird ein Verfahren zur Herstellung von Polyisobutylen mit einem Gehalt an endständigen Doppelbindungen von mehr als 50% aus verschiedensten technischen C₄-Kohlenwasserstoffströmen beschrieben, bei dem man den Gehalt an Oxygenaten im Kohlenwasserstoffstrom vor der Polymerisation des Isobutens durch Inkontaktbringen mit einem anorganischen Adsorptionsmittel bei einem Druck von 1 bis 20 bar und einer Temperatur von 20 bis 220°C verringert.

Aus der EP-A 671 419 ist ein Verfahren zur Herstellung von Polyisobutylen bekannt, bei dem ein praktisch halogenfreies Polyisobutylen mit einem hohen Gehalt an endständigen Doppelbindungen (Vinylidengruppen) durch Bortrifluorid-katalysierte Polymerisation des Isobutens aus einem technischen C₄-Kohlenwasserstoffstrom, dessen 1-Buten-Gehalt durch einen Vorbehandlungsschritt abgereichert wurde, erzeugt wird. Als derartiger Vorbehandlungsschritt wird beispielhaft die selektive Hydroisomerisierung genannt, wodurch 1-Buten in 2-Buten umgewandelt wird.

In der WO 2005/028404 wird ein Verfahren zur Herstellung von Valeraldehyd durch Hydroformylierung eines C₄-Kohlenwasserstoffstromes, welcher 1-Buten und wenigstens 15 Gew.-% Isobuten enthält, beschrieben. Der Valeraldehyd kann weiter durch Aldolkondensation und Hydrierung in 2-Propylheptanol umgewandelt werden. Der an Isobuten angereicherte Strom aus der Hydroformylierung kann unter anderem zu Erzeugung von Polyisobutylen verwendet werden.

WO 2007/057406 offenbart ein Verfahren zur Herstellung von hochreaktiven Isobutenhomo-oder -copolymeren mit einem zahlenmittleren Molekulargewicht Mₙ von 500 bis 1.000.000 durch Polymerisation von Isobuten aus einem technischen C₄ -Kohlenwasserstoffstrom mit einem Isobuten-Gehalt von 1 bis 90 Gew.-% in flüssiger Phase in Gegenwart eines Katalysatorkomplexes.

Der Vorteil des direkten Einsatzes von technischen C₄-Kohlenwasserstoffströmen als "Feed" bei der Polyisobuten-Erzeugung gegenüber des Einsatzes von Rein-Isobuten ist die Einsparung der vorgelagerten Verfahrensstufe der Isobuten-Extraktion aus solch einem technischen Kohlenwasserstoffstrom. Die Zusammensetzung und vor allem der Gehalt an Isobuten in den genannten als Feed eingesetzten technischen C₄-Kohlenwasserstoffströmen verändert sich jedoch permanent. So schwankt der Gehalt an Isobuten in solchen meist kontinuierlich angelieferten Strömen im Laufe des Umsetzungszeitraumes um einige Prozent, meist in der Größenordnung von 5 bis 10 Prozent, nach oben und nach unten. Als Folge davon schwankt auch die Spezifikation des erzeugten Polyisobutens, insbesondere der Gehalt an endständigen Doppelbindungen (Vinylidengruppen) und das mittlere Molekulargewicht sowie der Restgehalt an Monomeren und /oder Oligomeren und der durch einen halogenhaltigen Polymerisationskatalysator, z. B. einen Bortrifluorid-Komplex, verursachte Gehalt an Halogen im Polymer.

Aufgabe der vorliegenden Erfindung war es, ein Verfahren zu entwickeln, das eine ruhigere Fahrweise der Isobuten-Polymerisation aus technischen C₄-Kohlenwasserstoffströmen ermöglicht und einen gleichbleibenden hohen Gehalt an endständigen Doppelbindungen (Vinyliden-gruppen), ein konstantes mittleres Molekulargewicht, einen gleichbleibenden geringen Verbrauch an Polymersationskatalysator sowie einen niedrigen Restgehalt an Monomeren und/oder Oligomeren und an Halogen im Polymer sicherstellt.

Demgemäß wurde ein Verfahren zur kontinuierlichen Herstellung von Polyisobutylen mit einem zahlenmittleren Molekulargewicht Mn von 500 bis 5000 und einem Gehalt an endständigen Doppelbindungen von mehr als 50% durch Polymerisation von Isobuten in Gegenwart eines hierfür üblichen Polymerisationskatalysators gefunden, das dadurch gekennzeichnet ist, dass man einen technischen 1-Buten-, 2-Buten- und Isobuten-haltigen C₄ -Kohlenwasserstoffstrom, der bis zu 3000 Gew.-ppm 1,3-Butadien enthalten kann, und in dem der Gehalt an Isobuten im Laufe des Umsetzungszeitraumes um bis 10 Prozent schwankt, gemeinsam mit einem Strom von Rein-Isobuten vereinigt und in die Reaktionszone einspeist, so dass die stationäre Konzentration des Isobutens im vereinigten Strom am Einspeiseort des vereinigten Stromes in die Reaktionszone einen Wert von im Mittel mindestens 40 Gew.-% aufweist und die stationäre Konzentration des Isobutens im vereinigten Strom am Einspeiseort des vereinigten Stromes in die Reaktionszone einen im Wesentlichen konstant bleibenden Wert aufweist, welcher über den Zeitverlauf der Polymerisationsreaktion um maximal 10 % nach oben oder unten, bezogen auf den Mittelwert der Isobuten-Konzentration im vereinigten Strom am Einspeiseort, schwanken darf.

Vorzugsweise weist das erfindungsgemäße Verfahren eine stationäre Konzentration des Isobutens im vereinigten Strom am Einspeiseort des vereinigten Stromes in die Reaktionszone und zwar vorzugsweise einen Wert von im Mittel 40 bis 95 oder 45 bis 95 oder 50 bis 95 Gew.-%, insbesondere im Mittel 40 bis 80 oder 45 bis 80 oder 50 bis 80 Gew.-%, vor allem im Mittel 40 bis 65 oder 45 bis 65 oder 50 bis 65 Gew.-%, besonders bevorzugt im Mittel 40 bis 60 oder 45 bis 60 oder 50 bis 60 Gew.-%, ganz besonders bevorzugt im Mittel 40 bis 55 oder 45 bis 55 oder 50 bis 55 Gew.-%, auf.

In einer weiteren bevorzugten Ausführungsform weist die stationäre Konzentration des Isobutens im vereinigten Strom am Einspeiseort des vereinigten Stromes in die Reaktionszone einen im Wesentlichen konstant bleibenden Wert auf, welcher über den Zeitverlauf der Polymerisationsreaktion um maximal 10 %, insbesondere um maximal 8 %, vor allem um maximal 6 %, besonders bevorzugt um maximal 4 %, ganz besonders bevorzugt um maximal 2 %, nach oben oder unten, jeweils bezogen auf den Mittelwert der Isobuten-Konzentration im vereinigten Strom am Einspeiseort, schwanken darf.

Als technischer 1-Buten-, 2-Buten- und Isobuten-haltiger C₄-Kohlenwasserstoffstrom, der bis zu 3000 Gew.-ppm 1,3-Butadien enthalten kann und der erfindungsgemäß mit einem Strom von Rein-Isobuten vereinigt wird, eignen sich zum Einsatz bei der erfindungsgemäßen Polyisobutylen-Erzeugung im Prinzip alle eingangs aufgezählten technischen C₄-Kohlenwasserstoffströme. Bevorzugt werden hierfür jedoch Raffinat-Ströme und hierzu analoge Ströme. Solche Raffinat-und analoge C₄-Kohlenwasserstoffströme sind zweckmäßigerweise nach vier verschiedenen Methoden herstellbar:
Bei der ersten Methode stellt man den C₄-Kohlenwasserstoffstrom bereit, indem man
   Ia) in Schritt la Naphtha oder sonstige Kohlenwasserstoffverbindungen einem Steamcracking- oder FCC-Prozess unterwirft und aus dem dabei gebildeten Stoffstrom eine C₄-Olefin-Mischung abzieht, die 1-Buten, 2-Buten, Isobuten und mehr als 1000 Gew.-ppm Butadiene und gegebenenfalls Butine enthält, und
   IIa) aus der in Schritt la gebildeten C₄-Olefin-Mischung einen im wesentlichen aus 1-Buten, 2-Buten, Isobuten und gegebenenfalls Butanen bestehenden C₄-Kohlenwasserstoffstrom (meist als Raffinat 1 bezeichnet) herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.
Bei der zweiten Methode stellt man den C₄-Kohlenwasserstoffstrom bereit, indem man
   Ib) in Schritt Ib aus einem Butane enthaltenden Kohlenwasserstoffstrom durch Dehydrierung und nachfolgende Reinigung eine C₄-Olefin-Mischung herstellt, die 1-Buten, 2-Buten, Isobuten und mehr als 1000 Gew.-ppm Butadiene und gegebenenfalls Butine und gegebenenfalls Butane enthält, und
   IIb) aus der in Schritt Ib gebildeten C₄-Olefin-Mischung einen im wesentlichen aus 1-Buten, 2-Buten, Isobuten und gegebenenfalls Butanen bestehenden C₄-Kohlenwasserstoffstrom (meist als Raffinat I bezeichnet) herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.
Bei der dritten Methode stellt man den C₄-Kohlenwasserstoffstrom (üblicherweise in Form von Raffinat 2) bereit, indem man
   Ic) aus Methanol durch Dehydrierung eine C₄-Olefin-Mischung herstellt (MTO-Verfahren), die 1-Buten, 2-Buten, Isobuten und gegebenenfalls Butadiene, Alkine und gegebenenfalls Butane enthält, und
   IIc) die C₄-Olefin-Mischung durch Destillation, Selektivhydrierung oder Extraktivdestillation von Butadienen oder Alkinen befreit.
Bei der vierten Methode stellt man den C₄-Kohlenwasserstoffstrom bereit, indem man
   Id) in Schritt Id aus einem Olefine enthaltenden Kohlenwasserstoffstrom durch Metathese-Umsetzung und nötigenfalls nachfolgende Reinigung eine C₄-Olefin-Mischung herstellt, die 1-Buten, 2-Buten, Isobuten und gegebenenfalls Butadiene und gegebenenfalls Butine enthält, und
   IId) aus der in Schritt Id gebildeten C₄-Olefin-Mischung einen im wesentlichen aus 1-Buten, 2-Buten, Isobuten und gegebenenfalls Butanen bestehenden C₄-Kohlenwasserstoffstrom herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.

Unter "2-Buten" sollen hier sowohl cis- als auch trans-2-Buten sowie Mischungen hieraus verstanden werden.

Raffinat 2 weist im Wesentlichen die gleiche Zusammensetzung wie Raffinat 1 auf, bis auf die Tatsache, dass Raffinat 2 geringere Mengen an Isobuten enthält. Typischerweise weist Raffinat 2 Mengen von weniger als 10 Gew.-% Isobuten auf.

Die vierte Methode mit den Schritten Id und IId liefert üblicherweise C₄-Kohlenwasserstoffströme, die eine Isobuten-Gehalt von 70 Gew.-% bis 95 Gew.-%, insbesondere 80 Gew.-% bis 90 Gew.-% aufweisen; den Rest stellen im wesentlichen andere Butene und sonstige inerte Kohlenwasserstoffe dar. Als Olefine enthaltende Kohlenwasserstoffströme setzt man in Schritt Id in der Regel eine Olefin-Mischung als Ausgangsmaterial ein, die im wesentlichen aus Ethylen und 2-Buten besteht und bei der Metathese-Umsetzung neben Propen als Hauptprodukt auch Isobuten liefert; nach Abtrennung des Propens besteht der verbleibende Kohlenwasserstoffstrom überwiegend aus Isobuten.

Vorzugsweise wird die Extraktivdestillation in Schritt IIa, IIb, IIc oder IId mit einem Butadienselektiven Lösungsmittel durchgeführt, welches man aus der Klasse der polaren aprotischen Lösungsmittel, beispielsweise Aceton, Furfural, Acetonitril, Dimethylacetamid, Dimethylformamid oder N-Methylpyrrolidon, auswählt.

Die Selektivhydrierung in Schritt IIa, IIb, IIc oder IId kann zu einer weitgehenden Reduktion von Diolefinen und acetylenischen Verbindungen eingesetzt werden, da diese Verbindungen die nachfolgende Verfahrensstufen beeinträchtigen könnten. Zudem kann durch die selektive Hydrierung einer größeren Menge von 1,3-Butadien auch die Menge an linearen Monoolefinen beträchtlich erhöht werden, was die Produktionskapazität nachfolgender Stufen erhöht. Durch geeignete Katalysatoren sowie Fahrweisen (beispielsweise das Wasserstoffangebot betreffend) lässt sich das 1-Buten zu 2-Buten-Verhältnis in der Selektivhydrierung innerhalb gewisser Grenzen steuern (sog. Hydroisomerisierung). Es werden 1-Buten zu 2-Buten-Verhältnisse von wenigstens 1:3, bevorzugt von wenigstens 2:3, besonders bevorzugt von mehr als 1:1, angestrebt. Vorzugsweise wird der Teilschritt Selektivhydrierung in flüssiger Phase an einem Metall, ausgewählt aus der Gruppe Nickel, Palladium und Platin, auf einem Träger, vorzugsweise Palladium auf Aluminiumoxid, bei einer Temperatur von 20 bis 200°C, einem Druck von 1 bis 50 bar, einer Volumengeschwindigkeit von 0,5 bis 30 m³ Frischfeed pro m³ Katalysator pro Stunde und einem Verhältnis von Recycle zu Zustrom von 0 bis 30 mit einem Molverhältnis von Wasserstoff zu Diolefinen von 0,5 bis 50 durchgeführt.

Sofern der Gehalt an 1,3-Butadien in der gemäß Schritt la, Ib, Ic oder Id gewonnenen C₄-Olefin-Mischung 5 Gew.-% oder mehr beträgt, senkt man üblicherweise den Gehalt an 1,3-Butadien mittels Extraktivdestillation auf einen Gehalt zwischen 1000 Gew.-ppm und 5 Gew.-% ab und senkt den Gehalt an 1,3-Butadien anschließend mittels Selektivhydrierung weiter auf 1000 Gew.-ppm oder weniger ab.

Bevorzugt weist der bei der Polymerisation des Isobutens einzusetzende technische C₄-Kohlenwasserstoffstrom ein Vol.-Verhältnis 1-Buten zu 2-Buten von 3:1 bis 1:3 auf.

Der Gehalt an 1,3-Butadien im bei der Polymerisation des Isobutens einzusetzenden technischen C₄-Kohlenwasserstoffstrom beträgt bevorzugt weniger als 2000, besonders bevorzugt weniger als 1000, insbesondere weniger als 100 Gew.-ppm.

Im Allgemeinen enthält der bei der Polymerisation des Isobutens einzusetzende technische C₄-Kohlenwasserstoffstrom, welcher vorzugsweise ein Raffinat 1-Strom ist, 2 bis 35, vorzugsweise 5 bis 30 Gew.-% Butane, 10 bis 40, vorzugsweise 10 bis 30 Gew.-% 2-Buten, 10 bis 50, vorzugsweise 15 bis 35 Gew.-% 1-Buten, 30 bis 50, vorzugsweise 35 bis 45 Gew.-% Isobuten und 20 bis 3000, vorzugsweise 20 bis weniger als 2000, insbesondere 20 bis 1000 Gew.-ppm Butadiene.

In einer bevorzugten Ausführungsform der vorliegenden Erfindung führt man bei der Bereitstellung des bei der Polymerisation des Isobutens eingesetzten technischen 1-Buten-, 2-Buten- und Isobuten-haltigen C₄-Kohlenwasserstoffstromes, der bis zu 3000 Gew.-ppm 1,3-Butadien enthalten kann und der erfindungsgemäß mit einem Strom von Rein-Isobuten vereinigt wird, als zusätzlichen Schritt III eine Hydroformylierung des aus Schritt IIa bzw. IIb bzw. IId gewonnenen C₄-Kohlenwasserstoffstromes in Gegenwart eines üblichen Hydroformylierungskatalysators mit Wasserstoff und Kohlenmonoxid durch und trennt die dabei gebildeten C₅-Aldehyde vom resultierenden C₄-Kohlenwasserstoffstrom ab.

Diese Hydroformylierung kann in der für den Fachmann üblichen und bekannten Art und Weise durchgeführt werden. Die Hydroformylierung von 1-Buten führt zu n-Valeraldehyd, dem Hauptbestandteil der in der Hydroformylierungsstufe des oben genannten Verfahrens gebildeten C₅-Aldehyd-Mischung. Bei der Hydroformylierung wird übergangsmetallkatalysiert aus dem 1-Buten unter Zusatz von Synthesegas (Kohlenmonoxid-Wasserstoff-Mischung, üblicherweise im Vol.-Verhältnis von 3:1 bis 1:3) n-Valeraldehyd (n-Pentanal) hergestellt. In geringen Mengen können aus anderen Komponenten des C₄-Eingangsstromes strukturisomere C₅-Aldehyde entstehen.

Als Katalysatoren für die Hydroformylierungsreaktion werden in der Regel Rhodium-Komplexe mit Phosphor enthaltenden Liganden eingesetzt. Typischerweise handelt es sich bei solchen Liganden um ein mono- oder di-Phosphan, insbesondere ein Triarylphosphan wie Triphenylphosphan. Durchgeführt wird die Hydroformylierungsreaktion üblicherweise bei Temperaturen von 50 bis 150°C, vorzugsweise 70 bis 120°C, und bei Drücken von 5 bis 50 bar, vorzugsweise 10 bis 30 bar.

Der C₄-Kohlenwasserstoffstrom nach der Hydroformylierung (meist als Raffinat 1P bezeichnet) enthält üblicherweise 2 bis 25, vorzugsweise 5 bis 20 Gew.-% Butane, 25 bis 70, vorzugsweise 35 bis 55 Gew.-% 2-Buten, 1 bis 15, vorzugsweise 3 bis 10 Gew.-% 1-Buten, 30 bis 55, vorzugsweise 35 bis 50 Gew.-% Isobuten und 20 bis 1000, vorzugsweise 20 bis weniger als 300 Gew.-ppm Butadiene. Das Vol.-Verhältnis 1-Buten zu 2-Buten in diesem C₄-Strom beträgt üblicherweise 1:3 bis 1:60.

Die Polymerisation des Isobutens selbst kann nach einem Konditionierungsschritt mittels einem anorganischem Adsorptionsmittel, wie er in der WO 2007/096296 beschrieben ist, in der für den Fachmann üblichen und bekannten Art und Weise durchgeführt werden. Den diesbezüglichen repräsentativen Stand der Technik spiegeln beispielsweise die Schriften US-A4 152 499, US-A 4 605 808, US-A 5 068 490, EP-A 489 508 und EP-A 671 419 wider.

Als Polymersationskatalysator für Isobuten wird vorzugsweise ein homogener oder heterogener Katalysator aus der Klasse der Bronstedt- oder Lewis-Säuren eingesetzt. Insbesondere handelt es sich bei diesem Katalysator um Bortrifluorid oder Bortrifluorid-Komplexe wie Bortrifluorid-Etheraten, z. B. Bortrifluorid-Diethyletherat, oder Bortrifluorid-Alkohol-Komplexe, z. B. mit Methanol, Ethanol, Isopropanol oder sec.-Butanol. Auch Zinntetrachlorid, entweder allein oder zusammen mit Mineralsäuren oder Alkylhalogeniden wie tert.-Butylchlorid als Co-Katalysatoren, sowie wasserfreies Aluminiumchlorid können als Polymerisationskatalysatoren verwendet werden.

Als Polymerisationskatalysator für Isobuten können weiterhin auch Komplexe von Aluminiumtrihalogeniden wie Aluminiumtrichlorid oder Aluminiumalkylhalogeniden oder von Eisenhalogeniden wie Eisen(III)-chlorid mit Donoren wie Carbonsäurealkylestern oder insbesondere Dialkylethern wie Dibutylether, gegebenenfalls in Gegenwart eines Initiators wie eines Alkohols, eines Phenols oder Wasser, verwendet werden. Auch hat sich als Polymerisationskatalysator für Isobuten der Komplex aus einer Lewis-Säure wie Aluminiumtrichlorid oder Eisen(III)-chlorid und einem Donor wie Dibutylether in Gegenwart einer organischen Sulfonsäure wie Methansulfonsäure als Initiator bewährt.

Der Polymerisationskatalysator wird in der Regel in Mengen von 0,001 bis 10 Gew.-%, insbesondere 0,01 bis 1 Gew.-%, bezogen auf den Isobuten-Gehalt des eingesetzten C₄-Kohlenwas-serstoffstromes, eingesetzt.

Die Isobuten-Polymerisation wird üblicherweise bei Temperaturen von -100 bis +100°C, insbesondere von -50 bis +25°C, vor allem von -35 bis +5°C durchgeführt. Man arbeitet zweckmäßigerweise bei einem Druck von 10 bis 5000 kPa.

Die Polymerisationsreaktion wird zweckmäßigerweise durch Zugabe von Wasser oder von überschüssiger Mengen an basischem Material, beispielsweise gasförmigem oder wässrigem Ammoniak oder wässriger Alkalimetallhydroxid-Lösung wie Natronlauge, abgebrochen. Nach Abtrennung von nicht umgesetzten C₄-Monomeren wird das rohe Polymerisationsprodukt üblicherweise mit destilliertem oder entionisiertem Wasser mehrmals gewaschen, um anhaftende anorganische Bestandteile zu entfernen. Zur Erzielung hoher Reinheiten oder zur Abtrennung unerwünschter nieder- und/oder höhermolekularer Anteile kann das Polymersationsprodukt im Vakuum fraktionierend destilliert werden.

Man erzielt mit der erfindungsgemäßen Polymerisationsverfahren ein im wesentlichen halogenfreies Polyisobutylen mit einem hohen Gehalt an endständigen Doppelbindungen (Vinyliden-gruppen) von mehr als 50%, vorzugsweise von wenigstens 65%, insbesondere von wenigstens 75%, vor allem von wenigstens 80%. Der Restgehalt an Halogen, welches üblicherweise -je nach eingesetztem Polymerisationskatalysator - als Fluorid oder Chlorid vorliegt, beträgt meistens weniger als 150 Gew.-ppm, insbesondere weniger als 100 Gew.-ppm, vor allem weniger als 75 Gew.-ppm.

Das so hergestellte Polyisobutylen hat in der Regel eine zahlenmittleres Molekulargewicht Mₙ von 500 bis 5000, insbesondere 700 bis 3500, vor allem 750 bis 3000, jeweils gemessen durch Gelpermeationschromatographie (GPC). Die Dispersizität (D = M_{w}/Mₙ) beträgt typischerweise weniger als 2,5, vorzugsweise weniger als 2,0 und insbesondere 1,8 oder weniger.

Gegenstand der vorliegenden Erfindung ist auch eine Polymerisationsanlage zur kontinuierlichen Herstellung von Polyisobutylen mit einem zahlenmittleren Molekulargewicht Mn von 500 bis 5000 und einem Gehalt an endständigen Doppelbindungen von mehr als 50% durch Polymerisation von Isobuten in Gegenwart eines hierfür üblichen Polymerisationskatalysators, enthaltend eine temperierbare Reaktionszone für die Durchführung der Polymerisationsreaktion, Einspeisevorrichtungen und Abführvorrichtungen, dadurch gekennzeichnet, dass die Polymerisationsanlage eine Einspeiseeinrichtung in die Reaktionszone für einen vereinigten Strom aus einem technischen 1-Buten-, 2-Buten- und Isobuten-haltigen C₄ -Kohlenwasserstoffstrom, der bis zu 3000 Gew.-ppm 1,3-Butadien enthalten kann, und einem Strom von Rein-Isobuten enthält und die Einspeiseeinrichtung für den vereinigten Strom aus dem technischen C₄ -Kohlenwasserstoffstrom und dem Strom von Rein-Isobuten eine Regulierungseinrichtung enthält, welche gewährleistet, dass die stationäre Konzentration des Isobutens im vereinigten Strom am Einspeiseort des vereinigten Stromes in die Reaktionszone einen im Wesentlichen konstant bleibenden Wert aufweist, welcher über den Zeitverlauf der Polymerisationsreaktion um maximal 10 % nach oben oder unten, bezogen auf den Mittelwert der Isobuten-Konzentration im vereinigten Strom am Einspeiseort, schwanken darf.

Die Einspeiseeinrichtung für den vereinigten Strom aus dem technischen C₄-Kohlenwasserstoffstrom und dem Strom von Rein-Isobuten der erfindungsgemäßen Polymerisationsanlage enthält vorzugsweise eine Regulierungseinrichtung, welche gewährleistet, dass die stationäre Konzentration des Isobutens im vereinigten Strom am Einspeiseort des vereinigten Stromes in die Reaktionszone einen im Wesentlichen konstant bleibenden Wert aufweist, welcher über den Zeitverlauf der Polymerisationsreaktion um maximal 10 %, insbesondere um maximal 8 %, vor allem um maximal 6 %, besonders bevorzugt um maximal 4 %, ganz besonders bevorzugt um maximal 2 %, nach oben oder unten, jeweils bezogen auf den Mittelwert der Isobuten-Konzentration im vereinigten Strom am Einspeiseort, schwanken darf.

Zur Herstellung der Mischung des Stromes aus Rein-Isobuten mit dem C₄-Kohlenwasserstoffstrom können prinzipiell alle üblichen Einspeiseeinrichtungen verwendet werden. Die Vermischung kann entweder in kontinuierlicher Verfahrensweise oder in diskontinuierlicher Verfahrensweise mit anschließender kontinuierlicher Einspeisung der so hergestellten Mischung in die Reaktionszone erfolgen. Bei beiden Möglichkeiten kann die Vermischung verfahrenstechnisch durch statische oder dynamische Prinzipien erfolgen.

Unter kontinuierlicher Verfahrensweise ist hierbei die stetige Zufuhr der beiden Edukte über Rohrleitungen in ein Mischorgan und Weiterleitung in die folgenden Prozessschritte zu verstehen. Die Vermischung kann durch statische Mischapparate wie T-Stück, Düsen, Blenden, statischen Mischer oder durch dynamische Mischapparate wie Mischpumpen oder Rührkessel erzeugt werden.

Unter diskontinuierlicher Verfahrensweise ist hierbei die Herstellung von Mischungen direkt in Ansatzbehältern durch dynamische Mischapparate, d.h. durch Vermischen mittels Rührer oder durch Umpumpen bzw. Umpumpen mit statischen Mischorganen wie statischen Mischern oder Düsen im Umpumpkreis, durch statische Mischapparate wie statische Mischer, Düsen, Blenden oder T-Stücke im Zulauf des Ansatzbehälters, oder durch dynamische Mischapparate wie Mischpumpen oder Rührkessel zu verstehen. Nach Herstellung eines Mischansatzes wird dieser in die folgenden kontinuierlichen Prozessschritte weitergeleitet.

Die Einstellung einer im Wesentlichen konstant bleibenden Isobuten-Konzentration im in die Reaktionszone eingespeisten Strom kann regelungstechnisch prinzipiell durch alle hierfür üblichen Regulierungseinrichtungen erfolgen. Üblicherweise gibt man einen Sollwert für die einzustellende Isobuten-Konzentration vor, misst mit online-Analytik die jeweiligen Isobuten-Konzentrationen im C₄-Kohlenwasserstoffstrom und im resultierenden Strom nach dem Vermischen mit dem Rein-Isobutenstrom und lässt die Regulierungseinrichtung permanent dynamisch über Stellorgane die Durchflüsse von C₄-Kohlenwasserstoffstrom und Rein-Isobutenstrom durch die Einspeiseeinrichtungen steuern bzw. nachregeln.

Als technische Ausrüstung hierfür werden normalerweise Regelkreise mit Massendurchflussmessern, die meist nach einem Wärme-, Corioliskraft- oder Wirbelstrom-Meßprinzip arbeiten, und Stellorgane wie Regelventile, Regelkugelhähne oder Kugelhähne im dem Strömen verwendet. Alternativ kann auch auf den Massendurchflussmesser im C₄-Eingangsstrom verzichtet werden und dieser durch einen Massendurchflussmesser im Gesamtstrom ersetzt werden.

Die nachfolgenden Beispiele sollen die vorliegende Erfindung erläutern, ohne sie zu beschränken.

### Beispiele 1 bis 8

Die nachfolgenden Beispiele 1 bis 8 wurden in einer kontinuierlichen Polymerisationsapparatur, bestehend aus einem mantelgekühlten Reaktor mit einem Volumen von 800 ml, einem mechanischen Rührer, einem Rohstoffeintragsrohr mit Vorkühlung des Rohstoffes, mit einem separaten Einleitrohr für gasförmiges Bortrifluorid, einem Tropftrichter für das zugesetzte Methanol und einem Stutzen für den kontinuierlichen Austrag des Reaktorinhaltes durchgeführt.

Der über das Rohstoffeintragsrohr zugegeben Rohstoff entstammte einem auf die Reaktionstemperatur von -17°C gekühlten Mischbehälter, in den wahlweise Raffinat 1 der Qualität A, der Qualität B und Rein-Isobuten in unterschiedlichen Mengen vorgelegt und mittels Rührer gemischt wurden.

Die Zusammensetzung der Raffinat 1-Qualitäten war folgende:

| | Raffinat 1 A ("R1A") | Raffinat 1 B ("R1B") |
|---|---|---|
| Isobuten | 36,1 Gew.-% | 45,7 Gew.-% |
| 1-Buten | 35,4 Gew.-% | 27,3 Gew.-% |
| trans-2-Buten | 8,4 Gew.-% | 7,1 Gew.-% |
| cis-2-Buten | 5,8 Gew.-% | 4,2 Gew.-% |
| Isobutan | 4,1 Gew.-% | 3,4 Gew.-% |
| n-Butan | 10,2 Gew.-% | 11,0 Gew.-% |
| Butadien | 285 Gew.-ppm | 741 Gew.-ppm |

Das verwendete Rein-Isobuten ("R-IB") hatte eine Reinheit von > 99,8 Gew.-% (< 0,1 Gew.-% n-Butene; < 0,05 Gew.-% Butane; < 40 Gew- ppm Alkohole).

Die Reaktion wurde jeweils bei -17°C Reaktorinnentemperatur und einer Bortrifluorid/Methanolzugabe von 6,1 g/h BF₃ / 3,8 g/h Methanol durchgeführt. Die Durchflussmenge (entsprechend der Rohstoffeintragsmenge = Rohproduktaustragsmenge) betrug 7 l/h (ca. 4,4 kg/h), die mittlere Verweilzeit im Reaktor bei einem Füllstand von 500 ml entsprechend ca. 4,3 Minuten.

Der zunächst noch kalte Reaktoraustrag wurde in einen Überschuss an ca. 50°C heißem, demineralisiertem Wasser geleitet und intensiv gemischt. Die Menge des heißen Wassers wurde dabei so gewählt, dass die Mischtemperatur beider Phasen ca. 20°C betrug. Dabei verdampfte bereits ein Teil des Lösungsmittels (nicht umgesetzte C₄-Kohlenwasserstoffe). Nach ca. 20 Minuten Verweilzeit zum Absetzen der beiden Phasen wurde die obere (organische) Phase abgetrennt und Produktproben wurden für die Analyse in einem Rotationsverdampfer vom restlichen Lösungsmittel befreit.

Die nachfolgende Tabelle zeigt die Resultate der acht Polymerisationsläufe [Gehalt an Rest-Isobuten im Produkt in Gew.-% ("R"), zahlenmittleres Molekulargewicht Mₙ, Gehalt an Vinylidengruppen in % ("α"), Dispersität ("D") und Rest-Fluorgehalt im Produkt in Gew.-ppm ("F")] in Abhängigkeit von der mittleren Isobuten-Konzentration am Einspeiseort des Reaktors ("m-IB") und den Schwankungen der m-IB nach oben oder unten ("Sₐ", gemessen in absoluten Gew.-%, und "Sᵣ", gemessen in relativen %, jeweils bezogen auf die m-IB).

| Beispiel Nr. | Rohstoff [Gew.-%] | m-IB | R | Sₐ | Sᵣ | Mₙ | α | D | F |
|---|---|---|---|---|---|---|---|---|---|
| 1 | 100 R1A | 36,1 | 3,8 | 0 | 0 | 934 | 71,2 | 1,8 | 127 |
| 2 | 100 R1B | 45,7 | 3,8 | 0 | 0 | 1187 | 77,8 | 1,7 | 97 |
| 3 | 50,0 R1A + 50,0 R1B | 40,9 | 3,9 | 0 | 0 | 1009 | 76,9 | 1,7 | 111 |
| 4 * | 50,0 R1A + 50,0 R1B | 40,9 | 3,9 | 4,8 | 11,7 | 1076 | 72,8 | 2,1 | 123 |
| 5 | 78,2 R1A + 21,8 R-IB | 50,0 | 4,1 | 0 | 0 | 1193 | 81,2 | 1,7 | 68 |
| 6 | 92,1 R1B+ 7,9 R-IB | 50,0 | 4,0 | | 0 | 1211 | 82,3 | 1,7 | 57 |
| 7 ** | 50,0 Nr.5 + 50,0 Nr.6 | 50,0 | 4,1 | 0 | 0 | 1187 | 81,9 | 1,7 | 59 |
| 8 *** | 50,0 Nr.5 + 50,0 Nr.6 | 50,0 | 4,2 | 0 | 0 | 1226 | 80,8 | 1,8 | 63 |

| | | | | | | | | | |
|---|---|---|---|---|---|---|---|---|---|
| "R" wurde mit Headspace-GC bestimmt und gibt den Anteil an nicht umgesetztem Isobuten im verdampfbaren Produktgemisch unmittelbar nach der Durchmischung des Reaktoraustrages mit Wasser an. "α" gibt den Gehalt an Vinyliden-Gruppen aller im erzeugten Polyisobuten enthaltenen Kohlenstoff-Kohlenstoff-Doppelbindungen an und wurde über ¹H-NMR-Spektroskopie bestimmt. "D" wurde durch GPC bestimmt. Anmerkungen: * Im Vergleichsbeispiel Nr. 4 wurde im kontinuierlichen Betrieb alle 5 Minuten das als Rohstoff verwendete Raffinat 1 der Qualitäten A und B abwechselnd aber innerhalb eines jeweiligen 5-Minutenintervalls zu 100% eingesetzt. Das analysierte Produktmuster wurde über einen Zeitraum von 30 Minuten angesammelt, gemischt und wie oben beschrieben aufgearbeitet. Mit diesem Vorgehen wurde ein Rohstoffstrom simuliert, dessen Zusammensetzung sich im zeitlichen Verlauf mehrfach verändert. Der Vergleich mit Beispiel Nr. 3, bei dem beide Raffinat 1-Qualitäten vorab gemischt wurden, zeigt den Einfluss einer sich im zeitlichen Verlauf verändernden Rohstoffzusammensetzung auf die Produktqualität. ** Im Beispiel Nr. 7 wurden eine Mischung aus den Rohstoffen der Beispiele Nr.5 und Nr.6 in Gew.-Anteilen von 50:50 vorgemischt und eingesetzt. *** Im Beispiel Nr. 8 wurde die Mischung aus den Rohstoffen der Beispiele Nr. 5 und Nr. 6 verwendet, allerdings nicht vorgemischt, sondern es wurde abwechselnd alle 5 Minuten der jeweilige Rohstoff aus Beispiel Nr. 5 oder Nr. 6 eingesetzt. Das Produktmuster wurde über einen Zeitraum von 30 Minuten gesammelt und vor der Aufarbeitung intensiv gemischt. | | | | | | | | | |

## Patentansprüche

1. Verfahren zur kontinuierlichen Herstellung von Polyisobutylen mit einem zahlenmittleren Molekulargewicht Mₙ von 500 bis 5000 und einem Gehalt an endständigen Doppelbindungen von mehr als 50% durch Polymerisation von Isobuten in Gegenwart eines hierfür üblichen Polymerisationskatalysators, **dadurch gekennzeichnet, dass** man einen technischen 1-Buten-, 2-Buten- und Isobuten-haltigen C₄-Kohlenwasserstoffstrom, der bis zu 3000 Gew.-ppm 1,3-Butadien enthalten kann, und in dem der Gehalt an Isobuten im Laufe des Umsetzungszeitraumes um bis 10 Prozent schwankt, gemeinsam mit einem Strom von Rein-Isobuten vereinigt und in die Reaktionszone einspeist, so dass die stationäre Konzentration des Isobutens im vereinigten Strom am Einspeiseort des vereinigten Stromes in die Reaktionszone einen Wert von im Mittel mindestens 40 Gew.-% aufweist und die stationäre Konzentration des Isobutens im vereinigten Strom am Einspeiseort des vereinigten Stromes in die Reaktionszone einen im Wesentlichen konstant bleibenden Wert aufweist, welcher über den Zeitverlauf der Polymerisationsreaktion um maximal 10 % nach oben oder unten, bezogen auf den Mittelwert der Isobuten-Konzentration im vereinigten Strom am Einspeiseort, schwanken darf.

2. Verfahren nach Anspruch 1, **dadurch gekennzeichnet, dass** die stationäre Konzentration des Isobutens im vereinigten Strom am Einspeiseort des vereinigten Stromes in die Reaktionszone einen Wert von im Mittel 40 Gew.-% bis 60 Gew.-% aufweist.

3. Polymerisationsanlage zur kontinuierlichen Herstellung von Polyisobutylen mit einem zahlenmittleren Molekulargewicht Mn von 500 bis 5000 und einem Gehalt an endständigen Doppelbindungen von mehr als 50% durch Polymerisation von Isobuten in Gegenwart eines hierfür üblichen Polymerisationskatalysators, enthaltend eine temperierbare Reaktionszone für die Durchführung der Polymerisationsreaktion, Einspeisevorrichtungen und Abführvorrichtungen, **dadurch gekennzeichnet, dass** die Polymerisationsanlage eine Einspeiseeinrichtung in die Reaktionszone für einen vereinigten Strom aus einem technischen 1-Buten-, 2-Buten- und Isobuten-haltigen C₄-Kohlenwasserstoffstrom, der bis zu 3000 Gew.-ppm 1,3-Butadien enthalten kann, und einem Strom von Rein-Isobuten enthält und die Einspeiseeinrichtung für den vereinigten Strom aus dem technischen C₄-Kohlenwasserstoffstrom und dem Strom von Rein-Isobuten eine Regulierungseinrichtung enthält, welche gewährleistet, dass die stationäre Konzentration des Isobutens im vereinigten Strom am Einspeiseort des vereinigten Stromes in die Reaktionszone einen im Wesentlichen konstant bleibenden Wert aufweist, welcher über den Zeitverlauf der Polymerisationsreaktion um maximal 10 % nach oben oder unten, bezogen auf den Mittelwert der Isobuten-Konzentration im vereinigten Strom am Einspeiseort, schwanken darf.

## Claims

1. A process for continuously preparing polyisobutylene having a number-average molecular weight Mₙ of 500 to 5000 and a content of terminal double bonds of more than 50% by polymerizing isobutene in the presence of a polymerization catalyst customary therefor, which comprises combining a technical 1-butene-, 2-butene-and isobutene-containing C₄ hydrocarbon stream which may comprise up to 3000 ppm by weight of 1,3-butadiene and in which the content of isobutene varies in the course of the reaction period by up to 10 percent together with a stream of pure isobutene and feeding them into the reaction zone in such a way that the steady-state concentration of the isobutene in the combined stream at the feed point of the combined stream into the reaction zone has an average value of at least 40% by weight and the steady-state concentration of isobutene in the combined stream at the feed point of the combined stream into the reaction zone has a substantially constant value which may vary over the course of the polymerization reaction by a maximum of 10% in the upward or downward direction, based on the mean isobutene concentration in the combined stream at the feed point.

2. The process according to claim 1, wherein the steady-state concentration of isobutene in the combined stream at the feed point of the combined stream into the reaction zone has an average value of 40% by weight to 60% by weight.

3. A polymerization plant for continuously preparing polyisobutylene having a number-average molecular weight Mₙ of 500 to 5000 and a content of terminal double bonds of more than 50% by polymerizing isobutene in the presence of a polymerization catalyst customary therefor, comprising a temperature-controllable reaction zone for the performance of the polymerization reaction, feed devices and removal devices, wherein the polymerization plant comprises a feed device into the reaction zone for a combined stream of a technical 1-butene-, 2-butene- and isobutene-containing C₄ hydrocarbon stream which may comprise up to 3000 ppm by weight of 1,3-butadiene, and a stream of pure isobutene, and the feed device for the combined stream of the technical C₄ hydrocarbon stream and the stream of pure isobutene comprises a regulating device which ensures that the steady-state concentration of isobutene in the combined stream at the feed point of the combined stream into the reaction zone has an essentially constant value which may vary over the course of the polymerization reaction by a maximum of 10% in the upward or downward direction, based on the mean isobutene concentration in the combined stream at the feed point.

## Revendications

1. Procédé pour la préparation continue de polyisobutylène présentant un poids moléculaire moyen en nombre Mₙ de 500 à 5000 et une teneur en doubles liaisons terminales supérieure à 50% par polymérisation d'isobutène en présence d'un catalyseur de polymérisation usuel à cette fin, **caractérisé en ce qu'**on rassemble et injecte dans la zone de réaction un flux technique hydrocarboné en C₄ contenant du 1-butène, du 2-butène et de l'isobutène, qui peut contenir jusqu'à 3000 ppm en poids de 1,3-butadiène et dans lequel la teneur en isobutène au cours de la période de transformation varie de jusqu'à 10%, conjointement avec un flux d'isobutène pur de telle sorte que la concentration stationnaire en isobutène dans le flux rassemblé, au site d'injection du flux rassemblé dans la zone de réaction, présente une valeur moyenne d'au moins 40% en poids et la concentration stationnaire en isobutène dans le flux rassemblé, au site d'injection du flux rassemblé dans la zone de réaction, présente une valeur restant essentiellement constante, qui peut varier au cours du temps de la réaction de polymérisation d'au maximum 10% vers le haut ou vers le bas, par rapport à la valeur moyenne de la concentration en isobutène dans le flux rassemblé au site d'injection.

2. Procédé selon la revendication 1, **caractérisé en ce que** la concentration stationnaire en isobutène dans le flux rassemblé, au site d'injection du flux rassemblé dans la zone de réaction, présente une valeur moyenne de 40% en poids à 60% en poids.

3. Installation de polymérisation pour la préparation continue de polyisobutylène présentant un poids moléculaire moyen en nombre Mₙ de 500 à 5000 et une teneur en doubles liaisons terminales supérieure à 50% par polymérisation d'isobutène en présence d'un catalyseur de polymérisation usuel à cette fin, contenant une zone de réaction pouvant être régulée en température pour la réalisation de la réaction de polymérisation, des dispositifs d'injection et des dispositifs d'évacuation, **caractérisée en ce que** l'installation de polymérisation contient un dispositif d'injection dans la zone de réaction pour un flux rassemblé constitué par un flux hydrocarboné technique en C₄ contenant du 1-butène, du 2-butène et de l'isobutène, qui peut contenir jusqu'à 3000 ppm en poids de 1,3-butadiène, et par un flux d'isobutène pur et le dispositif d'injection pour le flux rassemblé constitué par le flux hydrocarboné technique en C₄ et par le flux d'isobutène pur contient un dispositif de régulation qui garantit que la concentration stationnaire en isobutène dans le flux rassemblé, au site d'injection du flux rassemblé dans la zone de réaction, présente une valeur restant essentiellement constante, qui peut varier au cours du temps de la réaction de polymérisation d'au maximum 10% vers le haut ou vers le bas, par rapport à la valeur moyenne de la concentration en isobutène dans le flux rassemblé au site d'injection.
